# EUROPEAN PATENT APPLICATION

(11) **EP 0 796 809 A2**
(43) Date of publication of application: **24.09.1997**
(21) Application number: 97301881.5
(22) Date of filing: 20.03.1997
(51) Int. Cl.: B65G 67/20

(54) **Vehicle loading system**

(30) Priority: 22.03.1996 GB 9606072
(71) Applicant: Morris, Alan Parker, London, NW1 9BX (GB)
(72) Inventor: Morris, Alan Parker, London, NW1 9BX (GB)
(74) Representative: Jehan, Robert

(57) **Abstract**

A vehicle loading system includes a set of parallel channels (10) set in a vehicle load surface, an inflatable member extending along each channel (10) and a profiled cover plate (13) within each channel resting on the inflatable member, wherein the cover plate (13) includes at least one longitudinal depression which guide rolling members along the length of the channel, and means to inflate said member either fully or partially, as well as to deflate it completely.

## Description

This invention relates to a vehicle loading system suitable for making the loading and unloading, particularly, of heavy loads easier and quicker.

It is financially advantageous to ensure that vehicles carrying goods, particularly very heavy goods, can be loaded and unloaded rapidly. Various schemes have been provided for this, including that described in GB-A-2126189. This system performs well but is less satisfactory when the unit portions of a load are very heavy, e.g. rolls of newsprint paper.

In order to handle such heavy loads, there have been other proposals using a much wider channel of much heavier construction. However, the weight of the system has then substantially reduced the payload, and the wide channel has introduced a danger of injury if someone slipped into or tripped on the channel.

The present invention proposes an improved vehicle loading system which can accept very heavy loads, which improves the load carrying capacity, and which does not have to be used in conjunction with a fixed loading platform.

According to the invention there is provided a vehicle loading system as specified in claim 1.

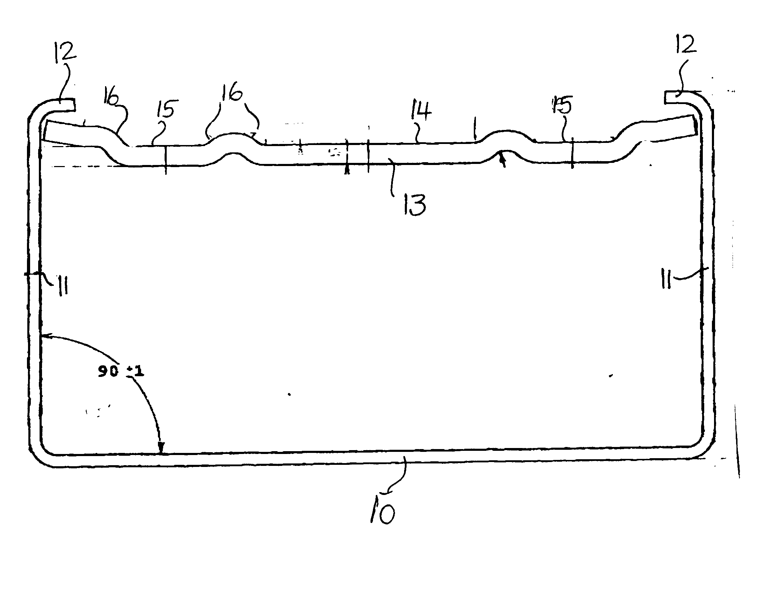

In order that the invention shall be fully understood, an exemplary embodiment thereof will now be described with reference to the accompanying drawing in which the sole Figure is a cross-section through a channel for setting into a vehicle load surface.

Within the body of a load-bearing surface of a vehicle are set a series of upwardly open, parallel channels running longitudinally (although conceivably also transversely) of the vehicle. These channels serve to guide "skates" which incorporate wheels or rollers which can run in a channel. Each channel has dimensions approximately 17 cms by 9 cms and a cross-section as illustrated in the Figure. It consists of a base 10 with side walls 11, each side wall being curved inwardly to form a lip 12 at its upper edge. The side walls 11 are substantially perpendicular to the base 10. The open top of the channel is then closed by a longitudinally extending cover plate 13, lying within the lips 12, which has a particular profile which will be described.

In the internal space of the channel is an inflatable hose or tube (not illustrated) which can be connected to a source of pneumatic pressure. The inflatable tube can be either totally deflated so that the cover plate 13 rests upon the base 10, or it may be partially inflated so that the cover plate 13 lies in a position midway up the side walls 11, or it may be fully inflated so that the cover plate 13 abuts the underside of the lips 12 as shown. In the latter position, the channel is no longer open and the load-bearing surface of the vehicle presents effectively a continuous surface, which avoids dangers of injury to a person walking across the surface.

The cover plate 13 has a central longitudinal depression 14 and spaced lateral depressions 15, all of which are bordered by sloped side areas 16. These depressions form guide tracks within which the rollers or wheels of skates for supporting heavy loads are guided along the channel. The sloped margins 16 tend to centre the rollers or wheels so that the skates cannot move sideways and in particularly cannot exert major sideways pressure at localised points along the upright side walls 11. By virtue of this, the channel section can have substantially reduced wall thickness which in turn reduces the structural weight to be built into the body of the vehicle, and allows the payload of the vehicle to be increased.

In use, a system of loading and unloading which is similar to that described in GB-A-2126189 can be adopted, requiring a loading platform with exactly matching channels on a rigid loading platform and the use of long chains of "skates". Alternatively, the system can be used with a different form of skate in which the raising and lowering mechanism is embodied within the skate, rather than requiring the use of the inflatable tube. In this case, the cover plate 13 is lowered to the base 10 and the skate runs with separated wheels running in the depressions 15. The guidance of the margins 16 ensures that no undue pressure is put on the side walls 11.

In other circumstances, the vehicle may be used away from a fixed loading surface or dock, employing otherwise conventional load shifting skates which are able to run, for example, in the central depression 14. Since these skates are less thick than the full depth of the side walls 11, the cover plate 13 can adopt an intermediate position when necessary in order to allow a skate to be withdrawn from beneath a load. The use of such an intermediate position avoids the need to fully deflate the inflatable tube, thus saving both time and reducing waste of energy compared with a complete deflation.

The vehicle may include a pneumatic system for inflation of the tube based upon a compressor attached to the engine of the vehicle, an independent compressor with its own motor, and/or compressed air reservoir tanks mounted beneath the vehicle load surface. The pneumatic system would include suitable valving to permit deflation and partial or complete inflation.

The disclosures in British patent application no. 9606072.8, from which this application claims priority, and in the abstract accompanying this application are incorporated herein by reference.

## Claims

1. A vehicle loading system including a set of parallel channels (10) set in a vehicle load surface, an inflatable member extending along each channel (10) and a profiled cover plate (13) within each channel resting on the inflatable member, wherein the cover plate (13) includes at least one longitudinal depression which guide rolling members along the length of the channel, and means to inflate said member either fully or partially, as well as to deflate it completely.

2. A vehicle loading system according to claim 1, including a plurality of longitudinal depressions.

3. A vehicle loading system according to claim 2, including longitudinal depressions having different transverse widths.
